# EUROPEAN PATENT APPLICATION

(11) **EP 4 797 712 A1**
(43) Date of publication of application: **26.08.2026**
(21) Application number: 24880943.6
(22) Date of filing: 09.04.2024
(51) Int. Cl.: H04N 23/52

(54) **SELF-CLEANING VEHICLE-MOUNTED CAMERA**

(30) Priority: 26.10.2023 CN 202322880617 U
(71) Applicant: Tung Thih Electron (Xiamen) Co., Ltd., Xiamen Fujian 361006 (CN)
(72) Inventor: DAI, Junping, Xiamen, Fujian 361006 (CN); YING, Song, Xiamen, Fujian 361006 (CN); YANG, Dingxin, Xiamen, Fujian 361006 (CN)
(74) Representative: Torggler & Hofmann Patentanwälte - Innsbruck
(86) International application number: PCT/CN2024/086744
(87) International publication number: WO 2025/086558

(57) **Abstract**

The present disclosure relates to a self-cleaning vehicle-mounted camera, which comprises a front cover (2) comprising a cavity (21); a camera (1) disposed in the cavity (21) and protruding out of a first end surface of the front cover (2) in an axial direction; and a nozzle assembly integrally formed with the front cover (2) and comprising a nozzle (22) and a nozzle tube (24), wherein the nozzle (22) is disposed on the first end surface of the front cover (2) and in communication with the nozzle tube (24), and is configured such that a nozzle orifice faces the camera (1). The self-cleaning vehicle-mounted camera disclosed in the present disclosure can reduce the external dimension to achieve miniaturization, simplify the assembling process, reduce the risk of abnormal noise caused by part-to-part assembly, and eliminate the material cost dedicated to the nozzle to thereby reduce the overall cost.

## Description

### CROSS REFERENCE TO RELATED APPLICATIONS

The present disclosure is based on and claims the priority right of a Chinese application filed on October 26, 2023 with an application number of 202322880617.4, the disclosure of which is incorporated herein by reference in its entirety.

### TECHNICAL FIELD

The present disclosure relates to a self-cleaning vehicle-mounted camera.

### BACKGROUND ART

With the increasing export of vehicles, the demand for vehicles and their accessories has become increasingly internationalized. For example, in the Middle East, Saudi Arabia, Africa and many countries or regions with harsh road conditions, vehicles and their accessories need to face various complex road conditions. Additionally, with the development of intelligent driving of vehicles and the accelerated advent of unmanned driving, unmanned vehicles have great potential requirements for high safety and high self-cleaning performance of vehicles and vehicle-mounted cameras.

In the relevant technologies known to the inventors, the nozzle of the self-cleaning vehicle-mounted camera is an independent component, and a corresponding installation space needs to be reserved for the nozzle inside the front cover, which may result in an oversized overall external dimension of the front cover, thus having certain restrictive requirements for the installation space. Furthermore, mounting the nozzle on the front cover may also cause the risk of abnormal noise due to the loose assembly of the nozzle.

### CONTENT OF THE INVENTION

The present disclosure provides a self-cleaning vehicle-mounted camera, which can reduce external dimension.

According to the present disclosure, a self-cleaning vehicle-mounted camera is provided, which includes:
a front cover including a cavity;
a camera disposed in the cavity and protruding out of a first end surface of the front cover in an axial direction; and
a nozzle assembly integrally formed with the front cover and including a nozzle and a nozzle tube, wherein the nozzle is disposed on the first end surface of the front cover and in communication with the nozzle tube, and is configured such that a nozzle orifice faces the camera.

In some embodiments, the nozzle tube is arranged at a side of the camera, and side by side therewith.

In some embodiments, a plurality of groups of limiting ribs are provided on side walls of the cavity, and the plurality of groups of limiting ribs include a first group of limiting ribs located at a side close to the nozzle, with a protruding height of the first group of limiting ribs being higher than that of the other groups of limiting ribs.

In some embodiments, the cavity includes a plurality of side walls, and the plurality of groups of limiting ribs are arranged on the plurality of the side walls in one-to-one correspondence; each group of limiting ribs includes two limiting ribs arranged at intervals in a circumferential direction, the limiting rib extends along the axial direction, and the plurality of limiting ribs surround to form a placement space for the camera; and in a radial direction of the cavity, the placement space has a size smaller than that of the cavity.

In some embodiments, the first end surface of the front cover is provided with a first opening communicating with the placement space, and the camera is disposed in the placement space and extends through the first opening.

In some embodiments, the nozzle tube includes a first portion and a second portion, in which the first portion includes a flow channel disposed within the side wall of the front cover and is disposed at intervals with the camera, while the second portion protrudes out of a second end surface of the front cover.

In some embodiments, the self-cleaning vehicle-mounted camera further includes a fixing base, wherein the front cover is connected to the fixing base by means of snap-connection, bonding, welding or locking.

In some embodiments, the camera is integrally provided with a heating lens.

In some embodiments, the heating lens is provided with a scratch-resistant lens.

In some embodiments, an outer contour dimension L*L of the camera is not more than 20 mm * 20 mm.

In some embodiments, the self-cleaning vehicle-mounted camera further includes a fixing base, the fixing base including:
a first connection portion including a first surface and a second surface, wherein the first surface and the second surface are at a predetermined included angle to accommodate the front cover, and the first surface is connected to a second end of the front cover; and
two second connection portions, both of which are connected to the first connection portion and are arranged at both sides of the camera respectively, wherein the second connection portions are used for connection with vehicles, and inner side walls of the two second connection portions combine with the first surface and the second surface to form a groove for accommodating the front cover.

In some embodiments, the axial direction is perpendicular to the first surface, and the predetermined included angle is greater than or equal to 90°and less than 180°.

In some embodiments, the first surface is higher than the second connection portion, and a height of the inner side walls of the second connection portions gradually increases from a first end far away from the first surface to a second end close to the first surface.

In some embodiments, the nozzle tube is disposed between the cavity and the second surface.

In some embodiments, the first surface is provided with a third hole and a fifth hole, in which the third hole is configured to allow a protruding portion of the camera to pass through, and the fifth hole is configured to allow the nozzle tube to pass through.

In some embodiments, the second end of the front cover is provided with a connection clasp and a positioning portion extending in the axial direction, and the first surface is provided with a sixth hole and a seventh hole, in which the sixth hole is configured to be snap-connected with the connection clasp, and the seventh hole is configured to engage with the positioning portion.

Based on the above technical solution, in the self-cleaning vehicle-mounted camera according to the embodiments of the present disclosure, the front cover and the nozzle assembly are integrally formed. While ensuring aesthetical installation, housing protection and the ability to achieve self-cleaning via direct water/air spraying, this design optimizes the internal structural spatial layout and stability, reduces the external dimension, achieves miniaturized arrangement, simplifies the assembling process, mitigates the risk of abnormal noise caused by part-to-part assembly, and eliminates the material cost dedicated to the nozzle to thereby reduce the overall cost. Furthermore, the adoption of the miniaturized camera enables the compact arrangement of the vehicle-mounted camera integrated with a self-cleaning function, bringing spatial convenience to the client-side design.

### BRIEF DESCRIPTION OF THE DRAWINGS

In order to explain the technical solutions in the embodiments of the present disclosure more clearly, the accompanying drawings to be used in the embodiments will be briefly described below. It should be understood that the following drawings only illustrate some embodiments of the present disclosure and thus should not be construed as limiting the scope. For those of ordinary skill in the art, they can also obtain other relevant accompanying drawings based on these drawings without paying inventive effort.
FIG. 1 is a schematic structural view of the self-cleaning vehicle-mounted camera from a first perspective according to some embodiments of the present disclosure.
FIG. 2 is a schematic structural view of the self-cleaning vehicle-mounted camera from a second perspective according to some embodiments of the present disclosure.
FIG. 3 is an exploded view of the self-cleaning vehicle-mounted camera according to some embodiments of the present disclosure.
FIG. 4 is a cross-sectional view of the self-cleaning vehicle-mounted camera according to some embodiments of the present disclosure.
FIG. 5 is a schematic view of a camera, a front cover and a nozzle from the axial perspective of the camera according to some embodiments of the present disclosure.
FIG. 6 is a schematic structural view of the front cover and a nozzle assembly according to some embodiments of the present disclosure.
FIG. 7 is a schematic structural view of the camera according to some embodiments of the present disclosure.
FIG. 8 is a schematic view of the camera from its axial perspective according to some embodiments of the present disclosure.

### Explanation of reference signs

1. camera; 11. heating lens; 2. front cover; 21. cavity; 22. nozzle; 23. first opening; 24. nozzle tube; 241. first portion; 242. second portion; 25. connection clasp; 26. first group of limiting ribs; 27. positioning portion; 3. fixing base; 31. first connection portion; 311. first surface; 312. second surface; 313. third hole; 314. fourth hole; 315. fifth hole; 316. sixth hole; 317. seventh hole; 32. second connection portion; 4. screw.

### EMBODIMENTS

The present disclosure is described in detail below. In the following paragraphs, different aspects of the embodiments are defined in further detail. Each aspect so defined may be combined with any other one or more aspects unless it is explicitly stated that they cannot be combined. In particular, any feature deemed to be preferred or advantageous may be combined with one or more other features deemed to be preferred or advantageous.

The terms such as "first", "second" or the like used in the present disclosure are merely for the convenience of description, so as to distinguish different components with the same name, and do not indicate a sequential or primary-secondary relationship.

In the depiction of the present disclosure, it should be understood that the orientation or positional relationships indicated by the terms "upper", "lower", "inner" or "outer" are defined based on the camera, the front cover, the fixing base, etc.. These terms are only for facilitating the description of the present disclosure, and do not indicate or imply that the referred device must have a specific orientation, or be constructed and operated in a specific orientation; therefore, such terms shall not be construed as a limitation on the protection scope of the present disclosure.

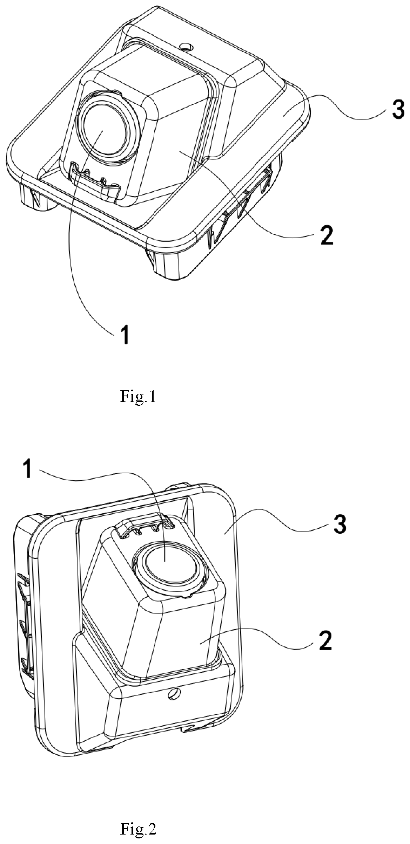

Referring to FIGS. 1 to 8, the present disclosure provides a self-cleaning vehicle-mounted camera, which includes a fixing base 3, a front cover 2 disposed on the fixing base 3, a camera 1 disposed on the front cover 2, and a nozzle assembly integrally formed with the front cover 2. The front cover 2 is connected to the fixing base 3 by means of snap connection, bonding, welding, locking or the like. The fixing base 3 is fixed to a vehicle to fasten the camera 1 to the vehicle, and the vehicle body supplies power to the camera 1 through a power line.

In order to make the structure of the self-cleaning vehicle-mounted camera more compact, in some embodiments, as shown in FIGS. 1 to 8, the self-cleaning vehicle-mounted camera includes the front cover 2, the camera 1 and the nozzle assembly. The front cover 2 includes a cavity 21, and the camera 1 is disposed in the cavity 21 and protrudes out of a first end surface of the front cover 2 in an axial direction. The nozzle assembly is integrally formed with the front cover 2, and the nozzle assembly includes a nozzle 22 and a nozzle tube 24. The nozzle 22 is disposed on the first end surface of the front cover 2 and in communication with the nozzle tube 24, wherein a nozzle orifice of the nozzle 22 faces the camera 1.

Optionally, the front cover 2 and the nozzle assembly may be made of plastic, rubber, metal or the like. Optionally, the cavity 21 may be of any shape such as a rectangle, a circle or a regular polygon.

In this embodiment, the front cover 2 and the nozzle assembly are integrally formed. While ensuring aesthetical installation, housing protection and the ability to achieve self-cleaning via direct water/air spraying, this design optimizes the internal structural spatial layout and stability, reduces the external dimension, achieves miniaturized arrangement, simplifies the assembling process, mitigates the risk of abnormal noise caused by the assembly between parts, and eliminates the material cost dedicated to the nozzle to thereby reduce the overall cost. Furthermore, the adoption of the miniaturized camera enables the compact arrangement of the vehicle-mounted camera integrated with a self-cleaning function, bringing spatial convenience to the client-side design.

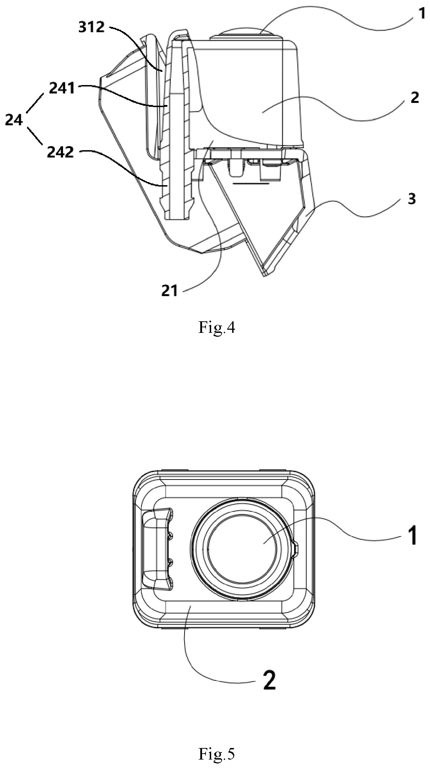

In some embodiments, as shown in FIG. 4, the nozzle tube 24 is arranged at a side of the camera 1, and side by side therewith. Optionally, the nozzle tube 24 may be arranged at any circumferential side of the camera 1, and side by side therewith; for example, the nozzle tube 24 may be disposed at a lower side of the camera 1, or in other words, the nozzle tube 24 is disposed between the camera 1 and the vehicle. Optionally, the nozzle tube 24 may be configured to be of any shape; for example, the nozzle tube 24 extends in the axial direction.

In this embodiment, by disposing the nozzle tube 24 at a side of the camera 1, the internal structure of the vehicle-mounted camera can be optimized, its external dimension can be reduced, and the processing difficulty of the mold can be lowered.

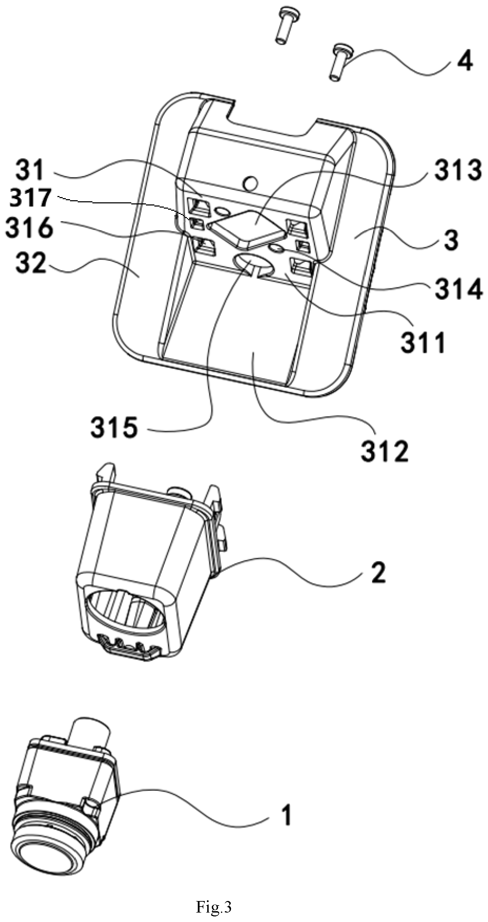

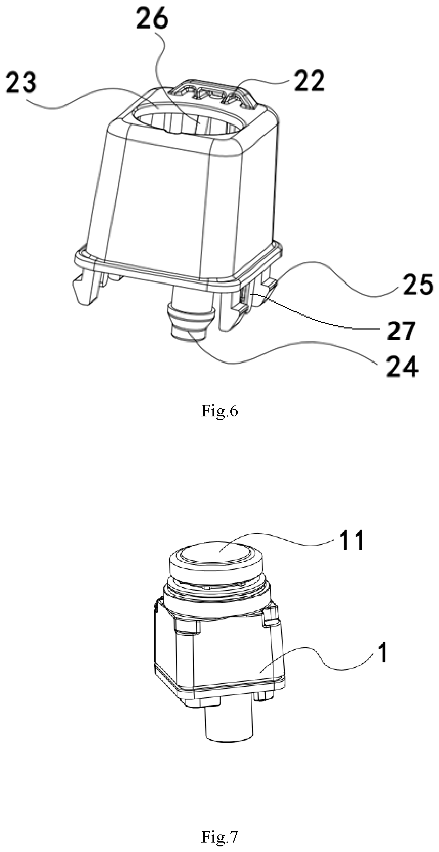

In some embodiments, as shown in FIGS. 3 and 6, a plurality of groups of limiting ribs are disposed on side walls of the cavity 21. The plurality of groups of limiting ribs include a first group of limiting ribs 26 located at a side close to the nozzle 22, and a protruding height of the first group of limiting ribs 26 is higher than that of the other groups of limiting ribs.

In this embodiment, the arrangement of the plurality of groups of limiting ribs can reduce the usage of injection molding materials to thereby reduce production costs; supporting the camera 1 by the groups of limiting ribs can improve the stability of the camera 1, preventing the camera 1 from shaking and from generating abnormal noise due to collisions; by disposing the first group of limiting ribs 26 at the side close to the nozzle 22, the distance between a lens of the camera 1 and the nozzle orifice can be appropriately increased, preventing the raised lens from blocking the cleaning path of the cleaning medium, and allowing the cleaning liquid from the nozzle orifice to cover the entire lens area.

In some embodiments, as shown in FIGS. 3 and 6, each side wall of the cavity 21 is projectingly provided with at least one limiting rib, and the height of the limiting rib(s) on one side is higher than that of the other limiting ribs.

In some embodiments, as shown in FIGS. 3 and 6, the cavity 21 includes a plurality of the side walls, and the plurality of groups of limiting ribs is arranged on the plurality of the side walls in one-to-one correspondence. Each group of limiting ribs includes two limiting ribs spaced apart in the circumferential direction, the limiting ribs extend in the axial direction, and the plurality of limiting ribs surround to form a placement space for mounting the camera 1. In a radial direction of the cavity 21, the size of the placement space is smaller than that of the cavity 21.

Specifically, the cavity 21 may include four side walls, and four groups of limiting ribs are provided on the side walls of the cavity 21, wherein the protruding height of the first group of limiting ribs 26 is higher than that of the other three groups of limiting ribs.

In this embodiment, the placement space for the camera 1 is formed by surrounding a plurality of limiting ribs, which can reduce the use of injection molding materials to thereby reduce production costs, and can also improve the stability of the camera 1, preventing the camera 1 from shaking and generating abnormal noise due to collisions.

In some embodiments, as shown in FIG. 6, the first end surface of the front cover 2 is provided with a first opening 23 that communicates with the placement space. The camera 1 is positioned within the placement space and extends through the first opening 23.

In some embodiments, as shown in FIGS. 3 and 6, the cavity 21 has four side wall surfaces, each of which is provided with two limiting ribs spaced from each other. The limiting ribs are divided into four groups, wherein the height of one group of the limiting ribs is higher than that of other groups of the limiting ribs in, and one group of the limiting ribs is designated as a first group of limiting ribs 26, while the other three groups of the limiting ribs are designated as a second group of limiting ribs. The four groups of limiting ribs surround to form a placement space. An upper end surface of the front cover 2 is provided with a first opening 23 that communicates with the cavity 21, and the first opening 23 is arranged to communicate with the corresponding placement space. A lower end surface of the front cover 2 is provided with a lower opening that communicates with the cavity 21. The camera 1 is inserted into the cavity 21 from the lower opening and passes through the first opening 23 such that a head portion of the camera 1 protrudes out of the first opening 23. Further, the four groups of limiting ribs define the position of the camera 1 to prevent it from shaking.

In some embodiments, as shown in FIG. 4, the nozzle tube 24 is disposed on the side wall of the front cover 2 and extends from the first end surface of the front cover 2 to protrude out of the second end surface of the front cover 2. The nozzle tube 24 includes a first portion 241 and a second portion 242. The first portion 241 includes a flow channel disposed within the side wall of the front cover 2, and the first portion 241 is spaced apart from the camera 1, while the second portion 242 protrudes out of the second end surface of the front cover 2.

In this embodiment, disposing the nozzle tube 24 on the side wall of the front cover 2 can reduce the external dimension of the vehicle-mounted camera to achieve compact design, simplify the assembling process, and eliminate the material cost dedicated to the nozzle to reduce the overall cost.

In some embodiments, as shown in FIG. 6, the nozzle 22 is disposed to open toward the first opening 23, such that the cleaning liquid or cleaning gas is supplied from the nozzle tube 24 to the nozzle 22 and ejected from the nozzle 22 onto the camera 1. When the vehicle is traveling on harsh road conditions, the lens surface of the camera is prone to be dirty, which affects the imaging quality. The nozzle 22 sprays the cleaning liquid or cleaning gas to the camera 1 to clean it in time, ensuring the normal operation of the camera 1. Herein, the cleaning liquid may also be water.

In some embodiments, as shown in FIGS. 3 and 6, at least two connection clasps 25 are projectingly provided on the second end surface of the front cover 2 along the axial direction, and the plurality of connection clasps 25 are arranged at intervals from each other. Specifically, the connection clasps 25 are disposed on two lower end surfaces adjacent to the nozzle, each lower end surface is projectingly provided with two connection clasps 25 spaced apart from each other, and a positioning portion 27 is projectingly provided between every two connection clasps 25. The front cover 2 is fixedly disposed on the fixing base 3 by means of the connection clasps 25 and the positioning portions 27.

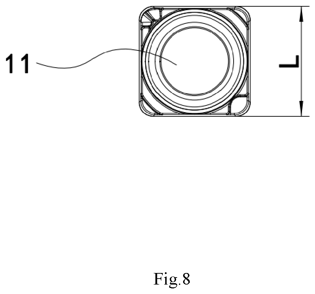

In some embodiments, as shown in FIGS. 7 and 8, a heating lens 11 is disposed on the camera 1, and the camera 1 and the heating lens 11 are integrally arranged. When the camera 1 is exposed to severe road conditions such as rainy, icy or frosty weather, the heating lens 11 can generate heat to remove frost and ice in a timely manner, ensuring the clarity of the images captured by the camera 1 and improving the driving safety of the vehicle.

In some embodiments, a scratch-resistant lens is disposed on the camera 1. When the vehicle is traveling on complex road conditions such as roads with a large amount of gravel and sand, the scratch-resistant lens can withstand the impact from gravel and the like to prevent breakage of the scratch-resistant lens. Optionally, the scratch-resistant lens may be disposed on the heating lens 11. The adoption of the scratch-resistant lens on the heating lens 11 can withstand impact of the gravel, and in combination with the self-cleaning function, can improve the recognition capability of the camera under severe weather and road conditions.

In some embodiments, as shown in FIG. 8, the camera 1 features a miniaturized form factor, with the outer contour dimension L* L of the camera 1 being not more than 20 mm * 20 mm, so as to save vehicle space and bring spatial convenience to the client-side design. In some embodiments, the outer contour dimension L* L of the camera 1 is not more than 19 mm * 19 mm, which can further facilitate the spatial design. In some specific embodiments, the outer contour dimension L*L of the camera 1 is set to 18 mm*18 mm, which ensures that the camera 1 can be sufficiently miniaturized without compromising the internal structure and functional configuration of the camera 1.

In some embodiments, as shown in FIG. 3, the front cover 2 and the fixing base 3 are snap-connected together to form an integrated body. The fixing base 3 includes a first connection portion 31 and two second connection portions 32 disposed on both sides of the first connection portion 31, wherein the second connection portions 32 are used for connecting and fixing the fixing base 3 to the vehicle. The first connection portion 31 is V-shaped and arranged obliquely to the second connection portions 32. The two V-shaped planes of the first connection portion 31 are defined as a first surface 311 and a second surface 312 respectively. An end of the second surface 312 away from the first surface 311 is connected to an end of the second connection portion 32, and the first surface 311 extends to the outside of the end surface of the second connection portion 32.

In some embodiments, as shown in FIG. 3, a third hole 313 is formed through the first surface 311 to receive an end of the camera 1 away from the heating lens 11. The third hole 313 is configured as a rectangular hole and is arranged in an inclined manner. At both sides of long edges of the third hole 313 are provided fourth holes 314. The spatial arrangement of the third hole 313 and the two fourth holes 314 can miniaturize the space and make the space utilization more optimized and reasonable. The end of the camera 1 away from the heating lens 11 is provided with two fixing holes spaced apart from each other. Two screws 4 pass through the fourth holes 314 and are locked into the fixing holes respectively to secure the camera 1 to the fixing base 3. This ensures that the axial direction of the camera 1 is inclined relative to the end surfaces of the second connection portions 32 of the fixing base 3, so that when the fixing base 3 is fixed to the vehicle, the camera 1 is positioned at an angle relative to the ground to capture clear images.

In some embodiments, as shown in FIG. 3, a fifth hole 315 is provided on a side of the third hole 313 closer to the second surface 312. The nozzle tube 24 passes through the fifth hole 315 and is connected to a component supplying the cleaning fluid or cleaning gas. The first surface 311 is also provided with a plurality of sixth holes 316 corresponding to the positioning portions 27 and the connection clasps 25. The sixth holes 316 are located at both sides of the third hole 313. The positioning portions are inserted into the corresponding sixth holes 316, and the connection clasps 25 are snapped into the corresponding sixth holes 316 to secure the front cover 2 to the fixing base 3.

In some embodiments, as shown in FIG.3, the self-cleaning vehicle-mounted camera further includes a fixing base 3, including:
a first connection portion 31 including a first surface 311 and a second surface 312, wherein the first surface 311 and the second surface 312 are at a predetermined included angle to accommodate the front cover 2, and the first surface 311 is connected to a second end of the front cover 2; and
two second connection portions 32 both connected to the first connection portion 31 and disposed on both sides of the camera 1, wherein the second connection portions 32 are used for connection to the vehicle, and inner side walls of the two second connection portions 32 combine with the first surface 311 and the second surface 312 to form a groove for accommodating the front cover 2.

In this embodiment, by using the inner side walls of the two second connection portions 32, together with the first surface 311 and the second surface 312, to form a groove for accommodating the front cover 2, the front cover 2 can be stably accommodated and prevented from shaking, thereby improving the structural stability of the vehicle-mounted camera.

In some embodiments, as shown in FIGS. 1 to 4, the axial direction is perpendicular to the first surface 311, and the predetermined included angle is greater than or equal to 90° and less than 180°.

In this embodiment, by defining the angle range of the predetermined included angle, the axial direction of the camera 1 can be at an angle to the end surfaces of the second connection portions 32 of the fixing base 3, such that when the fixing base 3 is fixedly arranged on the vehicle, the camera 1 can be arranged at an angle to the ground to capture and record clear images.

In some embodiments, as shown in FIG. 3, the first surface 311 is higher than the second connection portion 32, and the height of the inner side wall of the second connection portion 32 increases gradually from a first end far away from the first surface 311 to a second end close to the first surface 311.

In this embodiment, by varying the height of the inner side wall of the second connection portion 32, a groove for accommodating the front cover 2 can be formed to improve the structural stability of the vehicle-mounted camera, and the axial direction of the camera 1 can be arranged at an angle to the end surfaces of the second connection portions 32 of the fixing base 3 such that the camera 1 is arranged at an angle to the ground to capture and record clear images.

In some embodiments, as shown in FIG. 4, the nozzle tube 24 is disposed between the cavity 21 and the second surface 312.

In some embodiments, as shown in FIG. 3, the first surface 311 is provided with a third hole 313 and a fifth hole 315, the third hole 313 is configured to allow a protruding portion of the camera 1 to pass through, and the fifth hole 315 is configured to allow the nozzle tube 24 to pass through.

In this embodiment, the provision of relief openings on the first surface 311 can reduce the area occupied by the first surface 311, optimize and rationalize the space utilization, and further reduce the external dimension of the vehicle-mounted camera.

In some embodiments, as shown in FIG. 3, the second end of the front cover 2 is provided with connection clasps 25 and positioning portions 27 extending in the axial direction, and the first surface 311 is provided with sixth holes 316 and seventh holes 317, wherein the sixth holes 316 are configured to be snap-connected with the connection clasps 25, and the seventh holes 317 are configured to engage with the positioning portions 27.

In this embodiment, the provision of relief connection holes on the first surface 311 can improve the stability of the connection between the front cover 2 and the first surface 311; and the provision of relief positioning holes on the first surface 311 can improve the convenience of the connection between the front cover 2 and the first surface 311, and reduce the processing difficulty and processing cost of the vehicle-mounted camera.

In some embodiments, the present disclosure provides a self-cleaning vehicle-mounted camera, which includes a camera and a front cover, wherein the front cover is integrally provided with a nozzle; and the camera is projectingly provided on an upper end surface of the front cover. The front cover is provided with a cavity, and the nozzle includes a nozzle tube and a nozzle orifice, with the nozzle tube being disposed within the cavity, the nozzle orifice being disposed on the upper end surface of the front cover and in communication with the nozzle tube, and the nozzle orifice being disposed to open toward the camera.

In some embodiments, the camera is disposed within the cavity and extends to protrude out of the upper end surface of the front cover, and the camera is arranged side by side with the nozzle tube.

In some embodiments, the cavity is divided into a placement space and an accommodation space, wherein the camera is disposed in the placement space, and the nozzle tube is disposed in the accommodation space.

In some embodiments, each side wall surface of the cavity is provided with at least one limiting rib, wherein the limiting rib(s) on one side has a height in the axial direction of the cavity higher than that of the other limiting ribs, and the higher limiting rib(s) on said one side is/are defined as the first limiting rib(s).

In some embodiments, the cavity has four side wall surfaces, each of which is projectingly provided with two limiting ribs spaced from each other. The plurality of limiting ribs surrounds to form a placement space. An upper end surface of the front cover is provided with an upper opening that communicates with the cavity, and the upper opening is arranged to communicate with the corresponding placement space. The camera is disposed in the placement space and extends to pass through the upper opening.

In some embodiments, an accommodation space is formed between the plurality of first limiting ribs, and the nozzle tube is disposed in the accommodation space to be spaced apart from the camera.

In some embodiments, the self-cleaning vehicle-mounted camera further includes a fixing base, and the front cover is connected to the fixing base by means of snap connection, bonding, welding or locking.

In some embodiments, a heating lens is integrally disposed on the camera.

In some embodiments, the heating lens is provided with a scratch-resistant lens.

In some embodiments, the external dimension L*L of the camera is not more than 20 mm * 20 mm.

Advantageous effects of the present disclosure: the integral formation of the front cover and the nozzle, while ensuring aesthetical installation, housing protection and the ability to achieve self-cleaning via direct water/air spraying, optimizes the internal structural spatial layout and stability, reduces the external dimension, achieves miniaturized arrangement, simplifies the assembling process, mitigates the risk of abnormal noise caused by part-to-part assembly, and eliminates the material cost dedicated to the nozzle to thereby reduce the overall cost; furthermore, the adoption of the miniaturized camera enables the compact arrangement of the vehicle-mounted camera integrated with a self-cleaning function, bringing spatial convenience to the client-side design; in addition, a heating lens is disposed on the camera to realize defrosting and de-icing functions with heating performance and high safety; the adoption of the scratch-resistant lens on the heating lens can withstand impact of the gravel, and in combination with the self-cleaning function, can improve the recognition capability of the camera under severe weather and road conditions; multiple functions are integrated in one body.

The self-cleaning vehicle-mounted camera provided by the present disclosure has been described in detail above. Specific embodiments are applied herein to elaborate the principles and implementation modes of the present disclosure, and the description of the above embodiments is only used to help understand the method and core idea of the present disclosure. It should be pointed out that for those of ordinary skill in the art, several improvements and modifications can be made to the present disclosure without departing from the principles of the present disclosure, and these improvements and modifications also fall within the protection scope of the claims of the present disclosure.

## Claims

1. A self-cleaning vehicle-mounted camera, comprising:
a front cover (2) comprising a cavity (21);
a camera (1) disposed in the cavity (21) and protruding out of a first end surface of the front cover (2) in an axial direction; and
a nozzle assembly integrally formed with the front cover (2) and comprising a nozzle (22) and a nozzle tube (24), wherein the nozzle (22) is disposed on the first end surface of the front cover (2) and in communication with the nozzle tube (24), and is configured such that a nozzle orifice faces the camera (1).

2. The self-cleaning vehicle-mounted camera according to claim 1, wherein the nozzle tube (24) is arranged at a side of the camera (1), and side by side therewith.

3. The self-cleaning vehicle-mounted camera according to claim 1 or 2, wherein a plurality of groups of limiting ribs are provided on side walls of the cavity (21), and the plurality of groups of limiting ribs include a first group of limiting ribs (26) located at a side close to the nozzle (22), with a protruding height of the first group of limiting ribs (26) being higher than that of the other groups of limiting ribs.

4. The self-cleaning vehicle-mounted camera according to claim 3, wherein the cavity (21) comprises a plurality of side walls, and the plurality of groups of limiting ribs are arranged on the plurality of the side walls in one-to-one correspondence; each group of limiting ribs comprises two limiting ribs arranged at intervals in a circumferential direction, the limiting rib extends along the axial direction, and the plurality of limiting ribs surround to form a placement space for the camera (1); and in a radial direction of the cavity (21), the placement space has a size smaller than that of the cavity (21).

5. The self-cleaning vehicle-mounted camera according to claim 4, wherein the first end surface of the front cover (2) is provided with a first opening (23) communicating with the placement space, and the camera (1) is disposed in the placement space and extends through the first opening (23).

6. The self-cleaning vehicle-mounted camera according to any one of claims 1 to 5, wherein the nozzle tube (24) comprises a first portion (241) and a second portion (242), in which the first portion (241) comprises a flow channel disposed within the side wall of the front cover (2) and is disposed at intervals with the camera (1), while the second portion (242) protrudes out of a second end surface of the front cover (2).

7. The self-cleaning vehicle-mounted camera according to any one of claims 1 to 6, further comprising a fixing base (3), wherein the front cover (2) is connected to the fixing base (3) by means of snap-connection, bonding, welding or locking.

8. The self-cleaning vehicle-mounted camera according to any one of claims 1 to 7, wherein the camera (1) is integrally provided with a heating lens (11).

9. The self-cleaning vehicle-mounted camera according to claim 8, wherein the heating lens (11) is provided with a scratch-resistant lens.

10. The self-cleaning vehicle-mounted camera according to any one of claims 1 to 9, wherein an outer contour dimension L*L of the camera (1) is not more than 20 mm * 20 mm.

11. The self-cleaning vehicle-mounted camera according to any one of claims 1 to 10, further comprising a fixing base (3), the fixing base (3) comprising:
a first connection portion (31) comprising a first surface (311) and a second surface (312), wherein the first surface (311) and the second surface (312) are at a predetermined included angle to accommodate the front cover (2), and the first surface (311) is connected to a second end of the front cover (2); and
two second connection portions (32), both of which are connected to the first connection portion (31) and are arranged at both sides of the camera (1) respectively, wherein the second connection portions (32) are used for connection with vehicles, and inner side walls of the two second connection portions (32) combine with the first surface (311) and the second surface (312) to form a groove for accommodating the front cover (2).

12. The self-cleaning vehicle-mounted camera according to claim 11, wherein the axial direction is perpendicular to the first surface (311), and the predetermined included angle is greater than or equal to 90°and less than 180°.

13. The self-cleaning vehicle-mounted camera according to claim 11 or 12, wherein the first surface (311) is higher than the second connection portion (32), and a height of the inner side walls of the second connection portions (32) gradually increases from a first end far away from the first surface (311) to a second end close to the first surface (311).

14. The self-cleaning vehicle-mounted camera according to any one of claims 11 to 13, wherein the nozzle tube (24) is disposed between the cavity (21) and the second surface (312).

15. The self-cleaning vehicle-mounted camera according to any one of claims 11 to 14, wherein the first surface (311) is provided with a third hole (313) and a fifth hole (315), in which the third hole (313) is configured to allow a protruding portion of the camera (1) to pass through, and the fifth hole (315) is configured to allow the nozzle tube (24) to pass through.

16. The self-cleaning vehicle-mounted camera according to any one of claims 11 to 15, wherein the second end of the front cover (2) is provided with a connection clasp (25) and a positioning portion (27) extending in the axial direction, and the first surface (311) is provided with a sixth hole (316) and a seventh hole (317), in which the sixth hole (316) is configured to be snap-connected with the connection clasp (25), and the seventh hole (317) is configured to engage with the positioning portion (27).
